# EUROPEAN PATENT SPECIFICATION

(11) **EP 2 301 760 B1**
(45) Date of publication and mention of the grant of the patent: **14.08.2013**
(21) Application number: 10176155.9
(22) Date of filing: 10.09.2010
(51) Int. Cl.: B41N 1/08, B41N 3/00, C22B 21/00, C22B 21/06, C22F 1/04, C22C 21/00, C25F 3/04

(54) **Method of producing aluminum substrate for planographic printing plate and method of recycling planographic printing plate**
Verfahren zur Herstellung eines Aluminiumsubstrats für eine Flachdruckplatte und Verfahren zum Recyceln der Flachdruckplatte
Procédé de fabrication d'un substrat en aluminium pour plaque d'impression planographique et procédé pour le recyclage de la plaque d'impression planographique

(30) Priority: 28.09.2009 JP 2009222874; 30.09.2009 JP 2009227792
(43) Date of publication of application: 30.03.2011
(73) Proprietor: Fujifilm Corporation, Minato-ku Tokyo (JP)
(72) Inventor: Serikawa, Takeshi, Shizuoka-ken (JP); Osada, Masakazu, Shizuoka-ken (JP)
(74) Representative: HOFFMANN EITLE

(56) References cited:
- EP-A1- 2 261 047
- EP-A1- 2 275 275
- JP-A- 7 205 534
- JP-A- 2002 331 767

## Description

### BACKGROUND OF THE INVENTION

### Field of the Invention

The present invention relates to a method of producing an aluminum substrate for a planographic printing plate, and more particularly, to a method of producing an aluminum substrate for a planographic printing plate, in which a used planographic printing plate is efficiently recycling, and a method of recycling a planographic printing plate using the production method.

### Description of the Related Art

Planographic printing plates are produced by forming an image recording layer (for example, a photosensitive layer) on an aluminum planographic printing plate support. Since such an aluminum substrate needs to be subjected to a uniform and dense roughening treatment, that is, a surface treatment such as an electrochemical roughening treatment, a raw material with high purity and a strictly-adjusted trace metal content should be used as the aluminum material of the aluminum substrate.

On the other hand, energy of 140.9 MJ is theoretically required for producing 1 kg of new metal aluminum and the amount of CO₂ generated at the time is 9.22 kg/kg. Accordingly, when it is intended to produce a planographic printing plate while suppressing the generation of CO₂ as much as possible, it can be thought that end materials such as cut pieces generated in a used planographic printing plate having been used in printing or during producing a planographic printing plate are recycled as a recycled aluminum material. However, since the purity or the alloy composition of the recycled aluminum material does not reach the level required as the raw material of the planographic printing plate support, it is difficult to use the aluminum material recycled from a recovered planographic printing plate as a planographic printing plate support. The recycled aluminum material is generally used in applications in which the purity of the contained metal need not be strictly managed, for example, as a raw material of a window chassis, a vehicle engine, or a vehicle wheel, but is not provided for the planographic printing plate.
However, the production energy for producing 1 kg of a recycled bare metal containing a used planographic printing plate or end materials such as cut pieces of a planographic printing plate is only about 4% of 140.9 MJ. Accordingly, if such materials can be recycled for a planographic printing plate, it is possible to effectively reduce the generation of CO₂. For this purpose, it is important to construct a recycling method of guaranteeing the quality as an aluminum substrate for the planographic printing plate and then reducing the energy.

Recently, recycling used planographic printing plates or the end materials as a recycled material has been studied. For example, a method of recycling a used planographic printing plate as a support by removing impurities from the used planographic printing plate, adding new aluminum bare metal and master alloy (aluminum alloy containing several tens of % of the desired metal) thereto, directly introducing the resultant into a pre-rolling melting furnace to produce a melt, performing a filtering process thereon, and rolling the resultant is disclosed (for example, see Japanese Patent No. 3420817). It is suggested that the production cost of the aluminum substrate for the planographic printing plate is lowered by recycling used aluminum material for the aluminum substrate for the planographic printing plate formed of low-purity aluminum (for example, see Japanese Patent Application Laid-Open (JP-A) No. 2002-331767).
However, in the case of JP-A No. 2002-331767, when the low-purity aluminum is used as a base material of the substrate, various other means are necessary for accomplishing the adhesive strength to an image recording layer formed on the surface of the support or the hydrophilic property sufficient for serving as a non-image area.

In the method described in Japanese Patent No. 3420817, since a method (hereinafter, referred to as "direct introduction method") of directly introducing the used planographic printing plate into a pre-rolling melting furnace for forming a support is used, it is difficult to avoid the great influence of the composition of the used aluminum to be introduced on the alloy composition of the rolled aluminum plate. However, as described above, when the process of roughening the planographic printing plate, for example, the roughening treatment using an electrolysis method, is performed, the alloy composition of the aluminum plate has a critical influence on the roughened shape. Accordingly, when it is intended to obtain an aluminum substrate with a higher purity necessary for the roughening treatment using an electrolysis method, the amount of used planographic printing plate to be introduced is limited in view of quality and it is necessary to use a large amount of aluminum with a high purity. Therefore, the recycling efficiency is poor and it is not preferable in view of a reduction in carbon dioxide. It is necessary to measure the impurity composition in the course of performing the introduction into the melting furnace and performing the rolling process and the melting or the composition adjustment requires time, which causes deterioration in yield.

EP-A-2 261 047 and EP-A-2 275 275, both prior art according to Article 54(3) EPC only, both teach the production of an aluminum substrate for a planographic printing plate by recycling aluminum from previously used planographic printing plates. They also both teach methods for recycling a planographic printing plate including a previously recycled aluminum substrate.

### SUMMARY OF THE INVENTION

The invention is made in view of the above-mentioned situation. The present invention provides a method of producing an aluminum substrate for a planographic printing plate, which can produce an aluminum substrate for a planographic printing plate satisfying the quality of aluminum purity or trace-metal content with a high yield even when a used planographic printing plate is reused at the time of producing an aluminum substrate for a planographic printing plate and which can reduce the accompanying amount of aluminum oxide generated and greatly reduce the generation of Coy, a cause of global warming.

The present invention also provides a method of recycling a planographic printing plate with high efficiency which can greatly reduce the generation of CO₂ in processes by using the above-mentioned method of producing an aluminum substrate for a planographic printing plate.

According to a first aspect, the present invention provides a method of producing an aluminum substrate for a planographic printing plate, the method sequentially comprising:
preparing a recycled material including a used planographic printing plate having a planographic printing plate support obtained by treating an aluminum substrate by sequentially performing a roughening treatment, an anodization treatment, and a hydrophilizing treatment using an aqueous solution including polyvinyl phosphonic acid;
producing a recycled bare metal by introducing the obtained recycled material into a melting furnace, melting the recycled material at a temperature of from 680°C to 900°C to obtain a recycled material melt, and shaping the recycled material melt into a predetermined shape with a predetermined weight;
analyzing the aluminum purity and a trace metal content of the obtained recycled bare metal;
comparing analysis values of the aluminum purity and the trace metal content of the obtained recycled bare metal with a desired aluminium purity and a desired trace metal content predetermined for a planographic printing plate support in order to calculate differences therebetween, and determining a mixture ratio of a new aluminum bare metal and a trace-metal master alloy with a determined purity with respect to the recycled bare metal on the basis of the calculated differences;
producing a pre-rolling melt by introducing the recycled bare metal, the new aluminum bare metal, and the trace-metal master alloy into a pre-rolling melting furnace at amounts corresponding to the determined mixture ratio, and heating and melting the resultant, the aluminum purity of the pre-rolling melt being 99.0% or higher; and
producing a strip-shaped aluminum substrate by rolling the obtained pre-rolling melt.

Preferably the recycled material further includes at least one of cut pieces of the aluminum substrate or cut pieces of the planographic printing plate, which are generated during producing the planographic printing plate.

The recycled material, which is used in the production method according to the invention, of the aluminum substrate including a used planographic printing plate is not particularly limited to the used planographic printing plate, but may include cut pieces of an aluminum substrate or cut pieces of a planographic printing plate, which are generated in the course of producing the planographic printing plate.

According to a second aspect, the present invention provides a method of recycling a planographic printing plate, the method sequentially comprising:
producing a planographic printing plate support obtained by treating an aluminum substrate for the planographic printing plate by sequentially performing a roughening treatment, an anodization treatment, and a hydrophilizing treatment using an aqueous solution including polyvinyl phosphonic acid on at least one surface of the aluminum substrate for the planographic printing plate;
producing a planographic printing plate precursor by forming an image recording layer on the treated surface of the planographic printing plate support;
processing the obtained planographic printing plate precursor to obtain a planographic printing plate and performing a desired printing on the obtained planographic printing plate;
recovering the used planographic printing plate generated after printing; and
recycling the recovered planographic printing plate by providing the recovered planographic printing plate as a recycled material of an aluminum substrate in the method of producing an aluminum substrate for a planographic printing plate according to the above described first aspect,
wherein the recycled material is the recycled material obtained by the method of producing an aluminum substrate for a planographic printing plate according to the above described first aspect.

Preferably in the second aspect, the aluminum substrate of the planographic printing plate is the aluminum substrate obtained by a method in which the recycled material further includes at least one of cut pieces of the aluminum substrate or cut pieces of the planographic printing plate, which are generated during producing the planographic printing plate.

Although the function of the method of the invention is not clear, it is thought that the support used in the invention made to be hydrophilic using the polyvinyl phosphonic acid reduces the amount of aluminum oxide, which is an oxide material generated by the contact of aluminum with air at the time of melting aluminum during producing the recycled bare metal, in comparison with an aluminum substrate not having been subjected to the above-mentioned treatment whereby the loss of the aluminum material is small and the support can be recycled with high yield.

The invention includes determining the mixture ratio by analyzing the aluminum purity and the trace-metal content of the obtained recycled bare metal or the recycled melt, comparing the analyzed values with a desired aluminum purity and the desired trace-metal content or a planographic printing plate in order to calculate differences therebetween, and determining the mixture ratio of a new aluminum bare metal and trace-metal master alloy on the basis of the differences, and thus the ratio for mixing the maximum amount of recycled bare metal is determined, whereby recycling with high yield is accomplished with reduced loss of raw material.

Here, the "desired aluminum purity and the desired trace-metal content of a planographic printing plate support" means the "aluminum purity and the trace-metal content" required depending on the types of the planographic priming plates to be produced, and the optimal values are determined in advance depending on the required performance of the respective planographic printing plates.

Therefore, according to the invention, since the ratio for mixing the maximum amount of recycled bare metal can be determined with high precision on the basis of the set values, it is possible to greatly reduce the amount of the new aluminum bare metal used, which consumes great energy in the production thereof, and it is thus possible to effectively reduce the amount of carbon dioxide in producing an aluminum substrate for a planographic printing plate.

Accordingly, even when a used planographic printing plate is reused at the time of producing an aluminum substrate for a planographic printing plate, it is possible to greatly reduce the loss of energy and of yield.

The present invention provides a method of producing an aluminum substrate for a planographic printing plate, which can produce an aluminum substrate for a planographic printing plate satisfying the quality of aluminum purity or trace-metal content with a high yield even when a used planographic printing plate is reused at the time of producing an aluminum substrate for a planographic printing plate and which can reduce the accompanying amount of aluminum oxide generated and greatly reduce the generation of CO₂, a cause of global warming.

The present invention also provides a method of recycling a planographic printing plate with high efficiency which can greatly reduce the generation of CO₂ in the processes by using the above-mentioned method of producing an aluminum substrate for a planographic printing plate.

### BRIEF DESCRIPTION OF THE DRAWINGS

Exemplary embodiments of the present invention will be described in detail based on the following figures, wherein:
Fig. 1 is a schematic diagram illustrating a flow of closed-loop recycling in a method of recycling a planographic printing plate;
Fig. 2 is a schematic diagram illustrating an example of a recycled bare metal producing apparatus in which recycled bare metal is produced from a used planographic printing plate;
Fig. 3A is a plan view illustrating a trapezoidally-shaped recycled bare metal obtained by the method according to the invention; and
Fig. 3B is a side view illustrating a trapezoidally-shaped recycled bare metal obtained by the method according to the invention.

### DETAILED DESCRIPTION OF THE INVENTION

Hereinbelow, preferable embodiment of a method of producing an aluminum substrate for a planographic printing plate and a method of recycling a planographic printing plate according to the invention is described in detail.

### Method of producing aluminum substrate for planographic printing plate

The method of producing an aluminum substrate for a planographic printing plate according to the invention sequentially includes:
preparing recycled material including a used planographic printing plate having a planographic printing plate support obtained by sequentially performing a roughening treatment, an anodization treatment, and a hydrophilizing treatment using an aqueous solution containing polyvinyl phosphonic acid on the aluminum substrate;
producing a recycled bare metal by introducing the obtained recycled material into a melting furnace, melting the recycled material at a temperature of from 680°C to 900°C to obtain a recycled material melt, and shaping the recycled material melt into a predetermined shape with a predetermined weight;
analyzing the aluminum purity and a trace metal content of the obtained recycled bare metal;
comparing analysis values of the aluminum purity and the trace metal content of the obtained recycled bare metal with a desired aluminum purity and a desired trace metal content predetermined for a planographic printing plate support in order to calculate differences therebetween, and determining a mixture ratio of new aluminum bare metal and a trace-metal master alloy with a determined purity with respect to the recycled bare metal on the basis of the calculated differences;
producing a pre-rolling melt by introducing the recycled bare metal, the new aluminum bare metal, and the trace-metal master alloy into a pre-rolling melting furnace at amounts corresponding to the determined mixture ratio, and heating and melting, the aluminum purity of the pre-rolling melt being 99.0% or higher; and
producing a strip-shaped aluminum substrate by rolling the obtained pre-rolling melt.

Hereinbelow, the present invention is described in detail.

### Planographic printing plate support

The support used in the production method according to the invention is a planographic printing plate support obtained by sequentially performing a roughening treatment, an anodization treatment, and a hydrophilizing treatment using an aqueous solution containing polyvinyl phosphonic acid on an aluminum substrate.

### Aluminum substrate

First, an aluminum substrate is prepared.
As aluminum which is a raw material of the aluminum substrate used in the invention, a known material such as JIS1050, JIS1100, JIS3003, JIS3103, or JIS3005 material, which are described in the fourth version of Aluminum Handbook (1990), Japan Light Metal Association) can be used.
The Al content in the aluminum alloy as the substrate is preferably in the range of from 95% by mass to 99.4% by mass. When the Al content in the aluminum alloy is within the above range, the high recycling rate of the aluminum substrate can be accomplished.

The aluminum substrate used in the invention is produced by appropriately performing a rolling treatment or a heating treatment on the resultant that is molded by a conventional method using the above-mentioned aluminum as a raw material to make the thickness 0.1 nm to 0.7 mm, and performing a remedial leveling treatment if necessary.
Examples of the method of molding an aluminum substrate include a DC casting method, a method in which a soaking treatment and/or an annealing treatment is omitted from the DC casting method, and a continuous casting method.

### Roughening treatment

The aluminum substrate used in the invention is subjected to a roughening treatment. Examples of the roughening method include a chemical etching method, an electrochemical roughening method in which roughening treatment is electrochemically performed in a hydrochloric or nitric electrolytic solution, and a mechanical roughening method using a wire brush grain, a ball grain, and a brush grain roughening the surface with a nylon brush and an abrasive compound. The roughening methods may be used singly or in combination of two or more thereof. Among these, it is useful to use the electrochemical roughening method in which roughening treatment is chemically performed in a hydrochloric or nitric electrolytic solution. The amount of electricity suitable for the anode is in the range of from 50 C/dm² to 400 C/dm². More specifically, it is preferable that the AC and/or DC electrolysis is performed under the conditions of a temperature of from 20°C to 80°C, a time of 1 second to 30 minutes, and a current density of from 100 C/dn² to 400 C/dm² in the electrolytic solution containing hydrochloric acid or nitric acid of 0.1% to 50%.

The aluminum substrate having been subjected to the roughening treatment may be chemically etched using acid or alkali. Preferable examples of an etching agent include sodium hydroxide, sodium carbonate, sodium aluminate, sodium metasilicate, sodium phosphate, potassium hydroxide, and lithium hydroxide. The concentration and the temperature are preferably in the range of from 1% to 50% and in the range of from 20°C to 100°C, respectively. To remove the contamination (smut) remaining on the etched surface, an acid wash is performed. Examples of the acid include nitric acid, sulfuric acid, phosphoric acid, chromic acid, fluoric acid, hydrofluoric acid, and hydrofluoboric acid.
The methods and conditions of the roughening treatment are not particularly limited, as long as the center line average roughness (Ra) of the treated surface is in the range of from 0.2 µm to 0.55 µm.

### Anodization treatment

The roughened aluminum substrate is subjected to an anodization treatment to form an oxide film thereon. In the anodization treatment, an aqueous solution of sulfuric acid, phosphoric acid, oxalic acid or boric acid/sodium borate is used singly or in combination thereof as a major component of the electrolytic bath. The conditions of the anodization treatment is not particularly limited, but the anodization treatment is preferably performed by DC or AC electrolysis under the conditions of from 30 g/L to 500 g/L, a processing solution temperature of from 10°C to 70°C, and a current density of from 0.1 A/m² to 40 A/m². The thickness of the anodized oxide film is preferably in the range of from 0.5 µm to 1.5 µm and more preferably in the range of from 0.5 to 1.0 µm.

### Hydrophilizing treatment using aqueous solution containing polyvinyl phosphonic acid

The support which has the anodized oxide film formed thereon and then treated with the aqueous solution containing polyvinyl phosphonic acid is used.
Examples of the treatment using the aqueous solution containing polyvinyl phosphonic acid used in the invention include a treatment method using polyvinyl phosphonic acid described as a hydrophilizing treatment in U.S. Patent No. 4,153,461. For example, an aluminum substrate is treated by immersing it in the below-described aqueous solution. Other than the immersion, the aqueous solution may be applied with a brush, a sponge, a spray, a wheel coater, or the like. After the treatment, washing with water and drying may be performed as necessary.

The polyvinyl phosphonic acid is vinyl polymer having a phosphonate group and has preferably a number average molecular weight of from 10,000 to 25,000. The content of polyvinyl phosphonic acid is preferably in the range of from 0.1% by mass to 5.0% by mass in the aqueous solution. The processing temperature is preferably in the range of from 20°C to 90°C and the processing time is preferably in the range of from 10 seconds to 30 seconds. The aqueous solution may be an aqueous solution containing a volatile solvent such as ethyl alcohol, tetrahydrofuran, acetone, or methyl glycol acetate.
The amount of polyvinyl phosphate acid attached to the surface of the support having been subjected to the surface treatment using polyvinyl phosphonic acid is preferably in the range of from 8 mg/m² to 20 mg/m² in terms of the content of the phosphorous element. When the attached amount is small, it is not sufficient to suppress the production of aluminum oxide. The attached amount can be measured by the measurement of element content using fluorescent X ray.

The aluminum substrate produced preferably has a surface roughness (Ra) of from 0.2 µm to 0.55 µm. When the surface roughness (Ra) is 0.2 µm or more, the incompleteness in graining of the aluminum substrate can be more effectively suppressed and printing durability can be improved. When the surface roughness (Ra) is 0.55 µm or less, deterioration in reproducibility of small points and fine lines due to the difficulty in photo-polymerization at a deep part of the grained surface can be more effectively suppressed. The surface roughness (Ra) (roughness of the grained surface) is more preferably in the range of from 0.25 µm to 0.5 µm, and still more preferably in the range of from 0.3 µm to 0.45 µm.

In general, an image recording layer formed of a photosensitive composition depending on purposes is formed on the surface of the support, thereby obtaining a planographic printing plate precursor.
Preferable examples of the photosensitive composition used in the invention include a thermal positive photosensitive composition containing a photothermal material and an alkali-soluble high-molecular compound, a thermal negative photosensitive composition containing a photothermal material and a thermosetting compound, a conventional negative photosensitive composition containing a diazo resin and an alkali-soluble high-molecular compound, a conventional positive photosensitive composition containing an o-quinine di-azide compound and an alkali-soluble high-molecular compound, and a photosensitive composition that can be developed in a printer.

The photosensitive layer of the thermal positive photosensitive composition contains the alkali-soluble high-molecular compound such as a novolak resin and the photothermal material such as a cyanine dye, and preferably further contains an anti-soluble agent. The photosensitive layer is not limited to a single layer, but may have a two-layered structure.
The photosensitive layer of the thermal negative photosensitive composition contains the photothermal material and the thermosetting compound and serves to cure the region irradiated with an infrared ray to form an image area. This photosensitive layer may be a polymerization photosensitive layer containing an infrared absorber such as a cyanine dye, a radical generator such as an onium salt, a radical polymerized compound, and a binder polymer, or may be an acid cross-link photosensitive layer containing an infrared absorber, a thermal acid generator, an acid crosslinking agent, and an alkali-soluble high-molecular compound.
The photopolymerization photosensitive composition contains a compound having an ethylenically unsaturated bond, a photo-polymerization initiator, and an alkali-soluble high-molecular binder. The photo-polymerization initiator can be appropriately selected depending on the wavelength of a light source to be used. It is preferable to form an oxygen-blocking protective layer such as polyvinyl alcohol on the photosensitive layer.
The photosensitive layer of the photosensitive composition that can be developed in a printer may be a thermo-sensitive thermoplastic fine particle polymer or micro capsule.

A mechanism for forming an image in the image recording layer is not limited, and an area to which energy is applied by exposure or heating is improved in solubility or is cured, whereby the solubility to developer is altered.
Examples of the light source of activating rays used in exposing an image include a mercury lamp, a metal halide lamp, and a xenon lamp, and examples of the light source for scanning exposure include a helium neon laser, an argon laser, a KrF excimer laser, a semiconductor laser, and a YAG laser.
In the developing process, the non-cured area or the solved area in the image recording layer is removed, thereby obtaining planographic printing plate.
The obtained planographic printing plate is attached to a printer, and ink and dampening water are supplied thereto, whereby a printing is carried out.

The present invention is characterized by the mixture ratio determination process in which various recycled aluminum materials together with the above-mentioned support is melted by the use of a melting furnace other than the pre-rolling melting furnace to obtain a recycled bare metal with a predetermined shape and weight, and the mixture ratio of the recycled bare metal, new bare metal, and trace-metal master alloy to be introduced into the pre-rolling melting furnace is determined on the basis of the analysis result of the obtained recycled bare metal (or recycled melt).

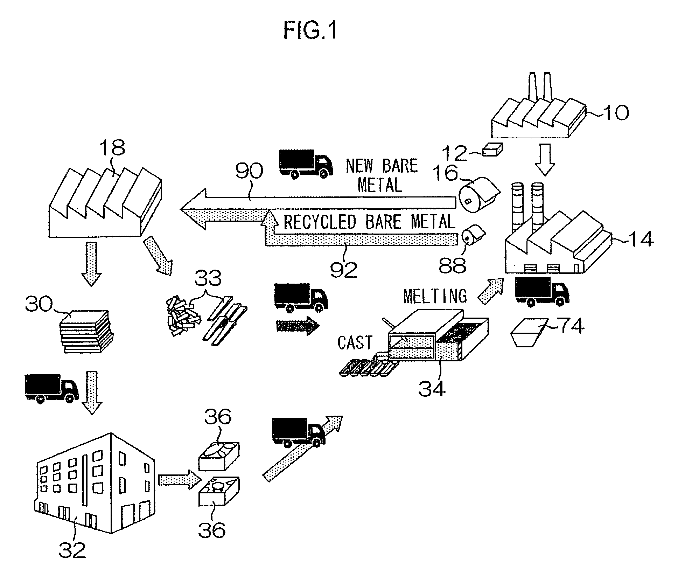

Fig. 1 is a diagram illustrating a closed-loop recycling flow in the method of recycling a planographic printing plate according to the invention, in which a planographic printing plate having a photosensitive image recording layer is exemplified.
The method of producing an aluminum substrate for a planographic printing plate according to the invention is included as a part of the closed-loop recycling flow.

### Preparation of Recycled material

In this process, recycled material is prepared. In general, an unnecessary used planographic printing plate having been subjected to a printing is recovered and used as the recycled material.
The used planographic printing plate may be used as the recycled material without any change, or may be subjected to a process of removing printing ink attached to the surface thereof.
As shown in Fig. 1, a used planographic printing plate 36 used for printing in a printing company 32 is recovered by the printing company, and then sent to and processed by a recycling plant 34.
In the invention, end materials such as cut pieces of a planographic printing plate produced in the course of producing the planographic printing plate may be included as the recycled material in addition to the used planographic printing plate (the end material 33 generated in processing a strip-shaped plate precursor shown in Fig. 1). When a protective sheet or a packing paper is attached to the recycled material, the protective sheet or the packing paper is preferably removed. The attached material such as image recording layer or the ink is preferably removed in advance from the recycled material before melting the recycled material. It is more preferable that the attached material such as the image recording layer or the ink is removed to be 1% by mass or less.
The recycled material may be cut into pieces, for example, using the method described JP-A-2000-12718 so as to improve its melting efficiency.

### Production of recycled bare metal

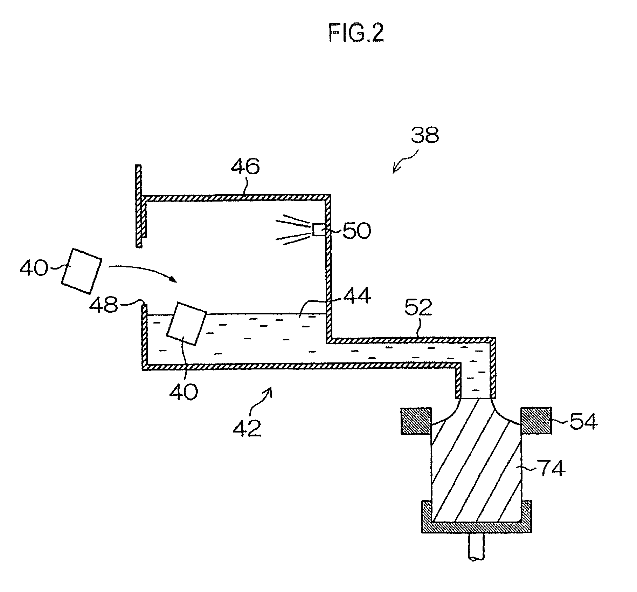

Fig. 2 shows an example of a recycled ingot producing apparatus 38, in which a recycled material 40 containing the used planographic printing plate 36 generated in the printing company 32 and the end material 33 with a side of 1 cm to 60 cm generated in the production plant 18 of a planographic printing plate are processed to produce a recycled melt, and a recycled bare metal is produced.
The recycled ingot producing apparatus 38 includes a melting furnace 42 melting the recycled material 40 to produce a melt 44, a casting mold solidifying the melt 44 to form a recycled ingot 74, and a receiver receiving the recycled ingot 74 from the lower side.
The top of the melting furnace 42 is covered with a ceiling wall 46, a partition wall vertically extends to a bottom wall from the ceiling wall 46, and an introduction port 48 is disposed in a side wall. A burner 50 is disposed in the other side wall opposed to the introduction port 48 and serves to heat and melt the recycled material 40 introduced from the introduction port.
When the melting furnace 42 is a dedicated melting furnace exclusively melting the recycled material 40, the variation in component purity (aluminum purity or trace metal content) of the obtained recycled melt 44 can be suppressed as much as possible. In view of improvement in purity of the recycled bare metal, it is preferable that the melting furnace 42 performs melting pure aluminum with an aluminum content of 99.5 % or more and the inside is washed before melting the recycled material 40. It is also preferable that the melting furnace 42 is filled in advance with a melt up to about 1/3 to 1/2 the furnace capacity before introducing the recycled material 40 thereto. Therefore, in the first stage of recycling, a melt of pure aluminum exists in advance by the above-mentioned amount.
In the melting step according to the invention, it is possible to enhance the melting speed and to shorten the tact time until obtaining the recycled melt 44, by melting the recycled material in the melting furnace 42 at a temperature range of from 680°C to 900°C.

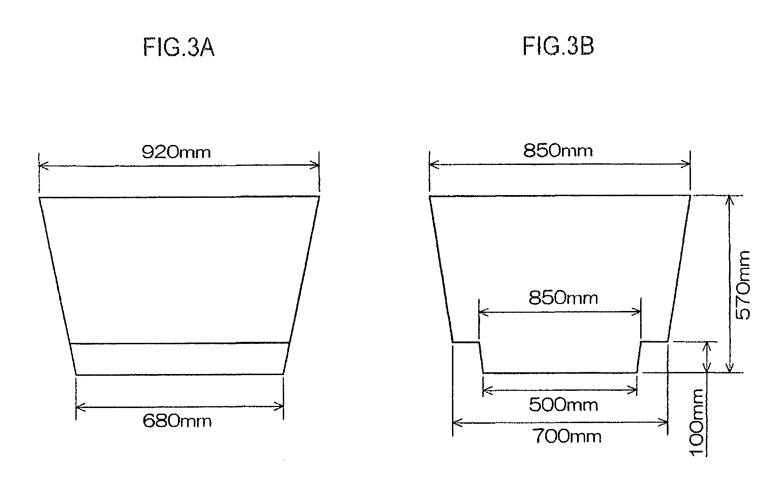

In general, in the recycled melt producing apparatus, since the recycled material 40 and the melt 44 come in direct contact with air, aluminum oxide is inevitably produced at the time of heating and melting aluminum metal. Since the melted aluminum oxide is lighter than pure aluminum, the melted aluminum oxide exists in the vicinity of the surface of the melt.
Since the surface of the aluminum substrate for the planographic printing plate used as the recycled material is treated by polyvinyl phosphonic acid, the production of aluminum oxide is reduced at the time of heating and melting the aluminum substrate in the recycled melt producing apparatus. When a predetermined amount of recycled material is introduced into and melted in the melting furnace 42, it is preferable that a small amount of melt is extracted from the melt 44 for analysis in this stage.
The melt 44 from which a small amount of melt for analysis has been extracted is supplied to a casting mold 54 having a trapezoid shape through a pipe 52. In this case, the total amount of melt 44 is not supplied, but it is preferable that 1/3 to 1/2 of the total amount of melt is left in the melting furnace 42 so as to use the remaining melt as a preliminary melt of the next melt treatment.
The melt in the casting mold 54 is cooled by water or air and is shaped into recycled bare metal (ingot) 74 of a trapezoid shape with 10 Kg to 1200 Kg. A possible shape of the recycled ingot is shown in Figs. 3A and 3B. Fig. 3A is a plan view illustrating an example of the trapezoid shape of the recycled bare metal and Fig. 3B is a side view thereof.

### Analysis

In the aluminum recycling plant 34, the components of the extracted recycled melt is analyzed. In some cases, an analysis sample may be extracted from the recycled bare metal 74. In the invention, the aluminum purity and the content of the trace metal (such as Si, Fe, Cu, or Mn) is analyzed and Mg, Zn, Ti, and Cr can be preferably analyzed. The analysis data is also sent when the recycled bare metal is delivered to the aluminum rolling plant 14. When the analysis is performed using the recycled bare metal 74, the analysis step may be performed in the aluminum rolling plant 14.

### Determination of mixture ratio

The recycled bare metal 74 produced in the production plant 34 is carried to the aluminum rolling plant 14, and is recycled therein. In the aluminum rolling plant 14, the values of the aluminum purity and the trace metal content obtained as the result in the above-mentioned analysis process are compared with a desired aluminum purity and a desired trace metal content of an aluminum substrate for a desired planographic printing plate in order to calculate differences therebetween, and the mixture ratio of a new bare metal with a determined aluminum purity and a trace-metal master alloy (aluminum alloy) with a determined trace-metal content with respect to the recycled bare metal is determined on the basis of the calculated difference. By this process, the maximum mixture ratio of the recycled bare metal for accomplishing desired aluminum purity and a desired trace metal content in the desired aluminum substrate for a planographic printing plate can be known, and the best recycling efficiency depending on the composition of the recycled bare metal can be achieved.

### Production of pre-rolling melt

The recycled bare metal, the new aluminum bare metal, and the trace-metal master alloy are introduced into the pre-rolling melting furnace with the mixture ratio determined in the mixture ratio determination process, and are heated and melted, thereby obtaining an aluminum melt used for producing a support. The pre-rolling melting furnace is generally much greater in capacity than the recycling melting furnace 42 and has a scale of 100 t.
The aluminum purity of the pre-rolling melt obtained in this process is 99.0% or higher and more preferably 99.5% or higher. The aluminum plate with aluminum purity of 99.5% or higher can be preferably used for the electrolytic roughening treatment as described later. When the aluminum purity is less than 99.0%, a problem with cracks or the like can be easily caused at the time of rolling an aluminum plate in a rolling treatment. The trace metal content is selected depending on a target physical property of the aluminum substrate for the planographic printing plate.
The melting condition may be the same as the melt producing condition in the recycled bare metal producing process or may be properly controlled depending on the rolling condition of the support.

### Production of aluminum substrate

An impurity removing treatment using flux, gas, or filter is performed on the resultant aluminum melt to remove non-metal impurities or combustion gas of the non-metal impurities, oxides, and the like and to remove H₂ gas or Na melted in the melt. The melt is processed preferably in two steps of a method using gas and a method using filter. The processed aluminum melt is cast preferably on the basis of a DC casting method using a twin-roll continuous caster or a fixed casting mold. The resultant is rolled in the above-mentioned process into a predetermined thickness and subjected to an annealing process as needed, whereby a strip-shaped aluminum substrate is produced. In general, the produced aluminum substrate 16 is stored and carried as an aluminum coil wound in a coil shape. The resultant aluminum substrate 16 is sent to the planographic printing plate producing plant 18 in the aluminum coil state. The recycled aluminum substrate 16 is provided to produce a planographic printing plate precursor.
According to the invention, it is possible to efficiently recycle and produce an aluminum substrate for a planographic printing plate.

### Production of planographic printing plate precursor

The resultant aluminum substrate for a planographic printing plate is used for producing a planographic printing plate precursor. In this way, the planographic printing plate is recycled according to the invention.
Hereinafter, a method of producing a planographic printing plate precursor using the resultant aluminum substrate for a planographic printing plate is described.

### Production of support

The aluminum substrate 16 obtained by the above-mentioned production method is first subjected to a roughening treatment required for a planographic printing plate support. Here, one surface or both surfaces of the aluminum substrate 16 are roughened.
The roughening treatment is not particularly limited, but the electrochemical roughening treatment can be preferably used. The electrochemical roughening treatment is performed by performing an etching in an acid aqueous solution of hydrochloric acid or nitric acid using AC current as electrolysis current. The acid concentration is preferably in the range of from 3 g/L to 150 g/L and the aluminum ion concentration in the solution is preferably adjusted to the range of from 2 g/L to 7 g/L. The amount of electricity to be applied is preferably in the range of from 20 C/dm² to 500 C/dm². It is preferable to use rectangular-wave current or trapezoid-wave current as the AC current, and it is more preferable to use the trapezoid-wave current.
In the electrochemical roughening treatment using the electrolysis method, the aluminum purity or the trace metal content of the aluminum substrate 16 has an influence on the uniformity of a produced pit, thereby affecting printing durability, contamination resistance, and exposure stability. Accordingly, the aluminum purity of the aluminum substrate is preferably 99.9% or higher, and more preferably 99.5% or higher. Among the trace metals contained in the aluminum substrate 16, the Cu content is preferably in the range of 0.001% by mass to 0.050% by mass, more preferably in the range of from 0.002% by mass to 0.040% by mass, and still more preferably in the range of from 0.008% by mass to 0.035% by mass. It is preferable that the Si content is in the range of from 0.05% by mass to 0.50% by mass, the Fe content is in the range of from 0.15% by mass to 0.7% by mass, the Mn content is in the range of From 0.002% by mass to 0.15% by mass, the Mg content is in the range of from 0.001% by mass to 1.5% by mass, the Zn content is in the range of from 0.001% by mass to 0.25% by mass, the Ti content is in the range of from 0.001% by mass to 0.10% by mass, the Cr content is in the range of from 0.001% by mass to 0.10% by mass.

Since smut or inter-metal compound exists in the surface of the aluminum substrate 16 having been subjected to the roughening treatment using the above-mentioned electrolysis method, the surface is preferably processed with alkali and is then subjected to a cleaning treatment using an acid solution containing sulfuric acid as a major component.
The anodization treatment is performed on the roughened aluminum substrate 16 to form an anodized oxide film. In the anodization treatment, an aqueous solution of sulfuric acid, phosphoric acid, oxalic acid, or boric acid/sodium borate is used as a major component of the electrolytic solution singly or in combination. The conditions for forming the anodized oxide film is as described above. The thickness of the anodized oxide film is preferably in the range of from 0.5 µm to 1.5 µm and can be properly selected from this range.
Various conditions of the hydrophilizing treatment to be performed thereafter can be selected as needed. When the obtained planographic printing plate precursor is used and then recycled again, it is preferable in view of recycling efficiency that the hydrophilizing treatment is performed using the polyvinyl phosphonic acid.
The hydrophilizing treatment is not limited to this method, but a known hydrophilizing treatment such as a hydrophilizing treatment using a sodium silicate solution may be properly performed. In this way, the planographic printing plate support 16A of which the surface has been subjected to the hydrophilizing treatment is obtained.

### Formation of imgage recording layer

Then, an image recording layer is formed on the obtained support, whereby the planographic printing plate precursor is produced. In the image recording layer forming process, a coating solution for the image recording layer formed of a photosensitive composition is applied to the roughened surface of the support 16A and the image recording layer is dried in the drying process.
Examples of the photosensitive compositions suitably used to form the image recording layer according to the invention include a thermal positive photosensitive composition containing a photothermal material and an alkali-soluble high-molecular compound, a thermal negative photosensitive composition containing a photothermal material and a thermosetting compound, a photopolymerization photosensitive composition, a negative photosensitive composition containing a diazo resin and a photo-crosslink resin, a positive resin photosensitive composition containing a quinine di-azide compound, and a photosensitive composition that does not require a specific developing step.
In this manner, a strip-shaped plate precursor of a planographic printing plate is produced, and the strip-shaped plate precursor is cut into rectangular sheets with a predetermined size in a state in which a laminated paper is superposed on the strip-shaped plate precursor, thereby producing a planographic printing plate precursor 30 having a laminated paper attached thereto (see Fig. 1).
Plural produced planographic printing plate precursors 30 each having a laminated paper attached thereto are stacked, packed, and sent to the printing company 32. Since the laminated paper is placed between the planographic printing plate precursors 30 at the time of stacking the planographic printing plate precursors 30, damages on the image recording layer of the planographic printing plate precursors 30 at the time of carrying and storing the plates are effectively suppressed. The laminated paper is removed before forming an image on the image recording layer.
The planographic printing plate precursor is made up through a writing process (image forming step) by exposure or heating and optionally performing the development, thereby obtaining a planographic printing plate.
The obtained planographic printing plate is supplied with print ink and dampening water, and is then printed to a printing process.

In the method of recycling a planographic printing plate according to the invention, a "new bare metal 100% route" 90 sending the aluminum substrate 16 of 100% new bare metal from the aluminum rolling plant 14 to the planographic punting plate producing plant 18 is carried out only at the first time, a "recycling route" 92 sending an aluminum substrate 88 containing a recycled material, which is obtained by the method of producing an aluminum substrate for a planographic printing plate according to the invention, from the aluminum rolling plant 14 to the planographic printing plate producing plant 18 is carried out at the second time or later.
In the method according to the invention, it is possible to construct a complete closed-loop recycling flow for recycling aluminum scraps generated in the field of planographic printing plate industry. As a result, it is possible to greatly reduce the generation of CO₂, compared with the case in which an aluminum substrate for a planographic printing plate is produced using only the new aluminum bare metal 12 produced by an aluminum refining plant 10.
Therefore, in the method according to the invention, it is possible to guarantee the quality of the aluminum purity and the trace metal content in the obtained aluminum substrate for a planographic printing plate, to improve the energy loss and the yield loss markedly, and to greatly reduce the generation of CO₂ in production of the planographic printing plate precursor.

### Examples

Hereinafter, examples of the invention is described, but the invention is not limited to the examples.

### Examples 1-1 and 1-2 and Comparative Example 1-1

### 1. Production of Aluminum substrate

A melt was produced using aluminum alloy containing 0.073% by mass of Si, 0.270% by mass of Fe, 0.028% by mass of Cu, 0.001% by mass of Mn, 0.001% by mass of Cr, 0.003% by mass of Zn, 0.020% by mass of Ti and the balance of Al and inevitable impurities, and an aluminum substrate used in Example 1-1 was produced as follows.
First, a melt process including degassing and filtering was performed to the aluminum alloy melt and a cast ingot with a thickness of 500 mm was produced using a DC casting method. The surface of the obtained cast ingot was face-milled by 10 mm, the cast ingot was heated, the hot roiling was started at 400°C without soaking the cast ingot, and then the resultant was rolled up to the thickness of 4 mm. Then, the resultant was cold-rolled up to the thickness of 1.5 mm, process annealing was carried out thereon, the resultant was cold-rolled up to 0.24 mm, and the flatness was corrected, thereby obtaining an aluminum plate (aluminum substrate).

### 2. Production of planographic printing plate support (Surface treatment of aluminum substrate)

The obtained aluminum plate was subjected to the surface treatment in the following process. After the surface treatment and the water washing, liquid-cutting was carried out with a nip roller. The water washing was carried out by ejecting water from a spray tube.

### 2-1. Mechanical roughening treatment

First, a mechanical roughening treatment was carried out using a brush roller with a rotating nylon brush formed of 6,1 0-nylon and having a hair length of 50 mm, and a hair diameter of 0.48 mm while supplying a suspension of silica (abrading agent, average particle diameter of 25 µm) with a specific gravity of 1.12 and water as a grinding slurry to the surface of the aluminum plate.

### 2-2. Chemical roughening treatment

Subsequently, an aqueous solution with a temperature of 70°C containing 27% by mass of NaOH and 6.5% by mass of aluminum ions was ejected to the aluminum plate to perform an alkali etching process. The amount of melted aluminum plate was 8 g/m². An aqueous solution of nitric acid with a temperature of 35°C was sprayed to the aluminum plate to perform a desmutting treatment for 10 seconds.

### 2-3. Electrochemical roughening treatment

An electrochemical roughening treatment was carried out using trapezoid-wave AC current and using an aqueous solution of nitric acid containing 1% by mass of nitric acid (which contains 0.5% by mass of aluminum ions and 0.007% by mass of ammonium ions at a temperature of 50°C). The current density at the peak of the AC current was 50 A/dm² when the aluminum plate was used as an anode and a cathode, the ratio of the amount of electricity of the AC current as the cathode to the amount of electricity as the anode was 0.95, the duty ratio was 0.50, the frequency was 60 Hz, and the total amount of electricity as the anode was 180 C/dm².
Thereafter, the water washing was carried out. Subsequently, an aqueous solution with a temperature of 45°C containing 26% by mass of NaOH and 6.5% by mass of aluminum ions was ejected to the aluminum plate by a spray to perform an alkali etching process. The amount of melted aluminum plate was 3 g/m². Then, a sulfuric acid solution (with a sulfuric acid concentration of 300 g/L and an aluminum ion concentration of 15 g/L) was ejected to the aluminum plate from a spray tube at 80°C for 7 seconds to perform an acid etching process. Thereafter, the water washing was carried out.

### 2-4. Anodization treatment

Subsequently, an anodization treatment was carried out on the aluminum plate under the conditions of a current density of 25 A/dm², a temperature of 50°C, and a time of 30 seconds, by using an aqueous solution with a sulfuric acid concentration of 100 g/L (containing 0.5% by mass of aluminum ions) as an anodizing solution and using a DC voltage, whereby an oxide film with a thickness of 1.5 µm was formed. Thereafter, the water washing was carried out by the use of a spray.

### 2-5. Hydrophilizing treatment using aqueous solution of polyvinyl phosphonic acid

The resultant aluminum substrate was immersed in an aqueous solution of 0.6% polyvinyl phosphonic acid (an aqueous solution produced using well water) at a solution temperature of 60°C for 30 seconds. In this way, an aluminum substrate (1) of a planographic printing plate was obtained. The amount of attached material measured using a fluorescent X ray was 18.8 mg/m² in terms of an amount of phosphorous element.

### 3. Production of planographic printing plate precursor (Formation of image recording layer)

### 3-1. Undercoating

A 3% methanol solution of copolymer of p-vinyl benzoate acid and vinylbenzyl triethylammonium chloride (copolymerization mole ratio of 85/15, Mw 28,000) was applied to the processed surface of the support by the use of a bar coater to form an undercoating layer so that the coating amount after drying is a mg/m².

### 3-2. Formation of recording layer (Intermediate layer)

The following lower layer coating solution was applied to the aluminum substrate having the undercoating layer formed thereon by the use of the bar coater so that the coating amount after drying is 0.85 g/m², and was then dried at 160°C for 44 seconds, thereby forming a lower layer. Thereafter, the following upper layer coating solution was applied thereto by the use of the bar coater so that the coating amount after drying is 0.22 g/m², and was then dried at 148°C for 25 seconds, thereby forming a planographic printing plate precursor.

### Lower layer coating solution

| | |
|---|---|
| N-(4-aminosulfonylphenyl) methacrylamide/acrylonitrile/methyl methacrylate (36/34/30: Mw 60,000) | 1.73 g |
| m,p-cresol novolak (m/p ratio=6/4, Mw 4,500) | 0.192 g |
| Cyanine dye A (below structure) | 0.134 g |
| 3-methoxy-4-diazodiphenyl amine hexafluorophosphate | 0.032 g |
| Ethyl violet | 0.0781 g |
| Polymer 1 (below structure) | 0.035 g |
| Methyl ethyl ketone | 25.41 g |
| 1-methoxy-2-propanol | 12.97 g |
| γ-butyrolactone | 13.18g |

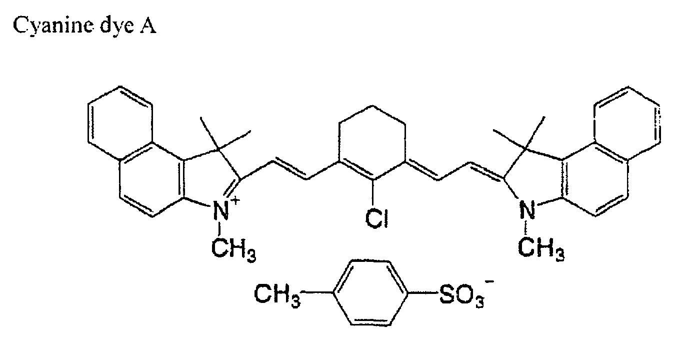

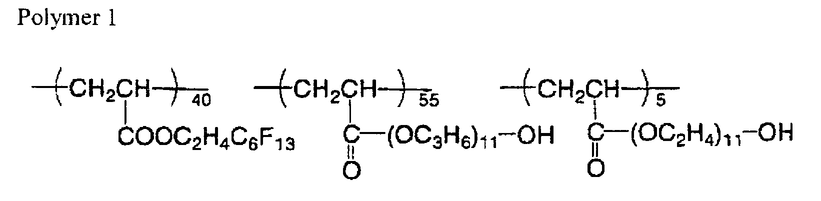

*Upper layer coating solution*

| | |
|---|---|
| m,p-cresol novolak (m/p ratio=6/4, Mw 4,500) | 0.3479 g |
| Cyanine dye A (above structure) | 0.0192 g |
| Polymer 1 (above structure) | 0.015 g |
| Quaternary ammonium salt (below structure) | 0.0043 g |
| Methyl ethyl ketone | 6.79 g |
| 1-methoxy-2-propanol | 13.07 g |

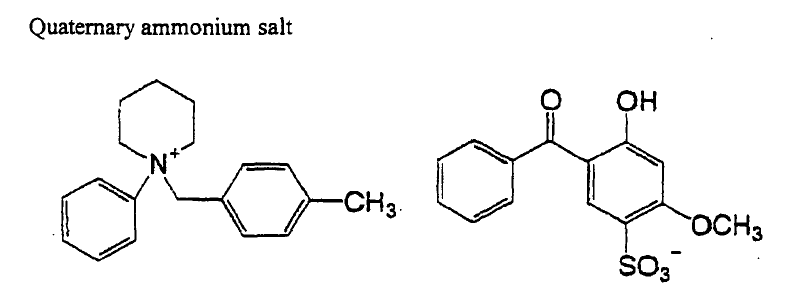

### 3-3. Production of planographic printing plate and printing

A test pattern was formed as an image on the planographic printing plate precursor with TRENDSETTER^{®} (trade name, manufactured by Creo).
Thereafter, a developing process was carried out at a developing temperature of 30°C for a developing time of 12 seconds by the use of PS processor LP940H (trade name, manufactured by Fujifilm Corporation) and provided with developer DT-2 (trade name, manufactured by Fujifilm Corporation). After the development, the resultant plate was provided to continuous printing using printer RISURON^{®} (trade name, manufactured by Komori Corporation).

### 4. Preparation of recycled material

The print ink attached to the surface of the planographic printing plate having been subjected to the printing was removed with a petroleum cleanser and the plate was detached from the printer. The used planographic printing plate was cut into small pieces with the greatest length of 5 mm to 50 mm using an electrical cutter. Foreign substances are separated from the raw material cut into small pieces using a suction separation method and then using a magnetic separation method. The recycled material obtained from the planographic printing plate support is called recycled material (1).

### 5. Production of recycled bare metal

In the recycling plant, first, 1.5 t of aluminum melt with a purity of 100% was melted in the melting furnace 42 of the recycled ingot producing apparatus 38 shown in Fig. 2. 1.5 t of the recycled material (1) was introduced thereto and was heated and melted at 720°C, thereby obtaining melt (1). Then, analysis samples were extracted from the melt.
Thereafter, the melt was made to flow into the casting mold 54 through a pipe 52, and was cooled and solidified so as to have the size shown in Figs. 3A and 3B, whereby recycled bare metal (ingot) was obtained.
Aluminum oxide slab floated over the melt surface was removed, the mass thereof was measured, and the corresponding weight of aluminum was subtracted from an ideal amount of aluminum when it is assumed that no oxidation is occurred, whereby the recycled bare metal yield was calculated.
The aluminum purity and the trace metal content of the analysis sample were analyzed. As a result, the melt (1) contained Si of 0.070%, Fe of 0.300%, Cu of 0.015%, and Mg of 0.010%.
The analysis result was sent to the aluminum rolling plant 14 along with the bare metal.

### 6. Production of aluminum substrate for planographic printing plate

In the aluminum rolling plant, an aluminum substrate for a planographic printing plate is produced in accordance with the order given from the planographic printing plate producing plant, and the order includes the alloy composition in addition to the thickness, size, and amount of the aluminum substrate.
Therefore, when the aluminum rolling plant 14 produces the aluminum substrate for a planographic printing plate using the delivered recycled bare metal, the alloy composition included in the order is sets as a target, the alloy composition is compared with the analysis values sent along with the recycled bare metal to calculate the differences therebetween, and the amounts of recycled bare metal, trace-metal master alloy, and pure aluminum to be mixed with the target value of the alloy composition and a predetermined amount of aluminum melt in the pre-rolling melting furnace are arithmetically calculated. By this step, the maximum mixture ratio of the recycled bare metal can be known, thereby obtaining the best recycling efficiency depending on the composition of the recycled bare metal.
For example, when the target values are Si of 0.07%, Fe of 0.25%, Cu of 0.025%, and Mg equal to or less than 0.01%, the capacity of the pre-rolling melting furnace is 100 t and when the recycled bare metal with the composition of the present embodiment is used, it is possible to obtain the target alloy composition by mixing 83 t of the recycled bare metal and 17 t of the pure aluminum bare metal and adjusting the contents of Si and Cu by the addition of master alloys.
Therefore, the recycled bare metal, the new aluminum bare metal, and the trace-metal master alloy were introduced into the pre-rolling melting furnace in accordance with the mixture ratio determined in the mixture ratio determination process, and the resultant was heated and melted, thereby obtaining a pre-rolling aluminum melt.
The degassing process and the filtering treatment were performed on the aluminum melt to remove impurities, and then an aluminum substrate was produced using the same DC casting method as described in "1. Production of Aluminum substrate" above.

A planographic printing plate support was produced similarly to "2. Production of planographic printing plate support" above, except that the above-obtained aluminum substrate is used as a raw material in place of using the new aluminum.
When 50 t of a new planographic printing plate was produced using the used planographic printing plate (PS plate) obtained by the method of producing an aluminum substrate for a planographic printing plate as a raw material and when 50 t of a planographic printing plate (PS plate) was produced using 100% of the raw material (new bare metal) of the aluminum substrate used in Example 1 (Control 1-1), the amounts of CO₂ generated were measured in the aluminum refining process, the recycled bare metal producing process, the aluminum substrate producing process, and the planographic printing plate producing process, and the measurement results were shown in Table 1. The recycled bare metal yield was also shown in Table 1.

### Example 1-2

A planographic printing plate precursor of Example 1-2 was produced similarly to Example 1-1, except that the polyvinyl phosphonate solution treatment in the step of 2-5 of Example 1-1 is replaced with the immersion treatment in 0.5% of polyvinyl phosphonate solution at a solution temperature 40°C for 30 seconds. The amount of phosphorous element measured using a fluorescent X ray was 9.8 mg/m². The planographic printing plate precursor was used in printing, and was then recycled in the same way to produce a new planographic printing plate precursor, which was evaluated in the same way as Example 1-1.

### Comparative Example 1-1

A planographic printing plate precursor of Comparative Example 1-1 was produced similarly to Example 1-1, except that the polyvinyl phosphonate solution treatment is not performed. The produced planographic printing plate was used in printing, and was then recycled in the same way to produce a new planographic printing plate precursor, which was evaluated in the same way as Example 1-1. The evaluation result is also shown in Table 1.

**Table 1**

| | Example 1-1 | Example 1-2 | Comparative Example 1-1 | Control 1-1 |
|---|---|---|---|---|
| Yield of recycled bare metal (%) | 95.2 | 94.8 | 93 | - |
| Amount of carbon dioxide generated in producing aluminum substrate (t/1t) | 1.5 | 1.5 | 1.51 | 10.41 |

The amount of CO₂ generated in the recycled bare metal producing process was calculated from the energy and the yield at the time of melting the recycled material. Data appearing on the website of the Japan Aluminum Association was used as the amounts of CO₂ generated in the aluminum refining process and the rolling process.
As can be seen from Table 1, in Example 1-1 and Example 1-2 in which the planographic printing plate was produced using the production method according to the invention, the amount of CO₂ can be reduced up to about 1/4 of the amount of CO₂ generated in the case (Control 1-1) in which new bare metal was used at an amount of 100% (that is, a 75% reduction can be achieved). On the other hand, in Comparative Example 1-1 using the support not subjected to the polyvinyl phosphonate treatment, the aluminum purity obtained after the recycled bare metal producing process was lower than that in Examples 1-1 and 1-2.
As can be seen from Table 1, in Example 1-1 and Example 1-2 in which the planographic printing plate was produced using the production method according to the invention, the amount of CO₂ can be reduced up to about 15% of the amount of CO₂ generated in the case (Control 1-1) in which new bare metal was used at an mount of 100% (that is, a 85% reduction can be achieved). On the other hand, in Comparative Example 1-1 using the support not subjected to the polyvinyl phosphonate process, the yield of the recycled bare metal was lower than that in Examples 1-1 and 1-2.

### Examples 2-1 and 2-2 and Comparative Example 2-1

### 1. Production of Aluminum substrate

A melt was produced using aluminum alloy containing 0.073% by mass of Si, 0.270% by mass of Fe, 0.028% by mass of Cu, 0.001% by mass of Mn, 0.001% by mass of Cr, 0.003% by mass of Zn, 0.020% by mass of Ti and the balance of Al and inevitable impurities, and an aluminum substrate used in Example 2-1 was produced as follows.
First, a melt process including degassing and filtering was performed to the aluminum alloy melt and a cast ingot with a thickness of 500 mm was produced using a DC casting method. The surface of the obtained cast ingot was face-milled by 10 mm, the cast ingot was heated, the hot rolling was started at 400°C without soaking the cast ingot, and then the resultant was rolled up to the thickness of 4 mm. Then, the resultant was cold-rolled up to the thickness of 1.5 mm, process annealing was carried out thereon, the resultant was cold-rolled up to 0.24 mm, and the flatness was corrected, thereby obtaining an aluminum plate (aluminum substrate).

### 2. Production of planographic printing plate support (Surface treatment of aluminum substrate)

The obtained aluminum plate was subjected to the surface treatment in the following process. After the surface treatment and the water washing, liquid-cutting was carried out with a nip roller. The water washing was carried out by ejecting water from a spray tube.

### 2-1. Electrochemical roughening treatment

An electrochemical roughening treatment was performed on the obtained aluminum plate in a hydrochloric acid bath of a hydrochloric acid solution (17 g/L) using trapezoid-wave AC current. The current density at the peak of the AC current was 50 A/dm² when the aluminum plate was used as an anode and a cathode, the ratio of the amount of electricity of the AC current as the cathode to the amount of electricity as the anode was 0.95, the duty ratio was 0.50, the frequency was 60 Hz, and the total amount of electricity as the anode was 180 C/dm².
Thereafter, the water washing was carried out. The maximum surface roughness of the aluminum plate was 4 µm.

### 2-2. Anodization treatment

Subsequently, an anodization treatment was carried out on the aluminum plate under the conditions of a current density of 4A/dm², a temperature of 40°C, and a time of 30 seconds, by using an aqueous solution with a phosphoric acid concentration of 40% by mass (containing 0.5% by mass of aluminum ions) as an anodizing solution and using a DC voltage, whereby an oxide film was formed. Thereafter, the water washing was carried out by the use of a spray. The formed anodized oxide film was analyzed with an electron microscope. As a result, pores with an average pore diameter of 750 Å were found by 175 /m².

### 2-3. Hydrophilizing treatment

The resultant aluminum substrate was immersed in an aqueous solution of 0.6% polyvinyl phosphonic acid (an aqueous solution produced using well water) at a solution temperature of 60°C for 30 seconds. In this way, an aluminum substrate (2) of a planographic printing plate was obtained. The amount of attached material measured using a fluorescent X ray was 18.8 mg/m² in terms of an amount of phosphorous element.

Similarly to "3. Production of planographic printing plate precursor (Formation of image recording layer)", a planographic printing plate precursor was produced using the obtained support.

Similarly to "4. Preparation of recycled material", the recycled material was obtained using the planographic printing plate used in printing.

Similarly to "5. Production of recycled bare metal", the recycled material was obtained and the yield of the recycled bare metal was calculated using the obtained recycled material.
The aluminum purity and the trace metal content of the analysis sample were analyzed. As a result, the obtained melt (2) contained Si of 0.070%, Fe of 0.300%, Cu of 0.015%, and Mg of 0.010%.
The analysis result was sent to the aluminum rolling plant 14 along with the recycled bare metal.

Similarly to "6. Production of aluminum substrate for planographic printing plate", the aluminum substrate was cast.

A planographic printing plate support was produced similarly to "2. Production of planographic printing plate support" using the above-obtained aluminum substrate as a raw material and using new aluminum.
When 50 t of a new planographic printing plate was produced using the used planographic printing plate (PS plate) obtained by the method of producing an aluminum substrate for a planographic printing plate as a raw material and when 50 t of a planographic printing plate (PS plate) was produced using 100% of the raw material (new bare metal) of the aluminum substrate used in Example 2-1 (Control 2-1), the amounts of CO₂ generated were measured in the aluminum refining process, the recycled bare metal producing process, the aluminum substrate producing process, and the planographic printing plate producing process, and the measurement results were shown in Table 2. The recycled bare metal yield was also shown in Table 2.

### Example 2-2

A planographic printing plate precursor of Example 2-2 was produced similarly to Example 2-1, except that the conditions of the aluminum substrate anodizing process are changed as follows. The planographic printing plate precursor was used in printing and was then recycled in the same way to produce a new planographic printing plate precursor, which was evaluated in the same way as Example 2-1.

### Condition of anodization treatment

An anodization treatment was carried out on the aluminum plate under the conditions of a current density of 4 A/dm², a temperature of 40°C, and a time of 30 seconds, by using an aqueous solution with a phosphoric acid concentration of 30% by mass and a sulfuric acid concentration of 10% by mass (containing 0.5% by mass of aluminum ions) as an anodizing solution and using a DC voltage, whereby an oxide film was formed. Thereafter, the water washing was carried out by the use of a spray. The formed anodized oxide film was analyzed with an electron microscope. As a result, pores with an average pore diameter of 500 Å were found by 200 /µm².

### Comparative Example 2-1

A planographic printing plate precursor was produced similarly to Example 2-1, except that the conditions of the aluminum substrate anodizing process are changed as follows. The planographic printing plate precursor was used in printing and was then recycled in the same way to produce a new planographic printing plate precursor, which was estimated in the same way as Example 2-1.

### Condition of anodization treatment

An anodization treatment was carried out on the aluminum plate under the conditions of a current density of 6 A/dm², a temperature of 30°C, and a time of 30 seconds, by using an aqueous solution with a sulfuric acid concentration of 30% by mass (containing 0.5% by mass of aluminum ions) as an anodizing solution and using a DC voltage, whereby an oxide film was formed. Thereafter, water washing was carried out by the use of a spray. The formed anodized oxide film was analyzed with an electron microscope. As a result, pores with an average pore diameter of 130 Å were found by 1000 /µm² or more.

**Table 2**

| | Example 2-1 | Example 2-2 | Comparative Example 2-1 | Control 2-1 |
|---|---|---|---|---|
| Yield of recycled bare metal (%) | 95.5 | 94.3 | 92.8 | - |
| Amount of carbon dioxide generated in producing aluminum substrate (t/1t) | 1.50 | 1.50 | 1.51 | 10.41 |

The amount of CO₂ generated in the recycled bare metal producing process was calculated from the energy and the yield at the time of melting the recycled material. Data appearing on the website of the Japan Aluminum Association was used as the amounts of CO₂ generated in the aluminum refining process and the rolling process.
As can be seen from Table 2, in Example 2-1 and Example 2-2 in which the planographic printing plate was produced using the production method according to the invention, the amount of CO₂ can be reduced up to about 1/4 of the amount of CO₂ generated in the case (Control 2-1) in which new bare metal was used at an amount of 100% (that is, a 75% reduction can be achieved). On the other hand, in Comparative Example 2-1 using a support in which the Cu content in the aluminum alloy as a raw material of the aluminum substrate departs from the range according to the invention, the aluminum purity obtained after the recycled bare metal producing process was lower than that in Examples 2-1 and 2-2.
As can be seen from Table 2, in Example 2-1 and Example 2-2 in which the planographic printing plate was produced using the production method according to the invention, the amount of CO₂ can be reduced up to about 15% of the amount of CO₂ generated in the case (Control 2-1) in which new bare metal was used at an amount of 100% (that is, a 85% reduction can be achieved). On the other hand, in Comparative Example 2-1 using a support formed of aluminum alloy in which the Cu content departs from the range according to the invention, the yield of the recycled bare metal was lower than that in Examples 2-1 and 2-2.

## Claims

1. A method of producing an aluminum substrate for a planographic printing plate, the method sequentially comprising:
preparing a recycled material including a used planographic printing plate (36) having a planographic printing plate support obtained by treating an aluminum substrate by sequentially performing a roughening treatment, an anodization treatment, and a hydrophilizing treatment using an aqueous solution including polyvinyl phosphonic acid;
producing a recycled bare metal by introducing the obtained recycled material into a melting furnace (42), melting the recycled material at a temperature of from 680°C to 900°C to obtain a recycled material melt, and shaping the recycled material melt into a predetermined shape (74) with a predetermined weight;
analyzing the aluminum purity and a trace metal content of the obtained recycled bare metal;
comparing analysis values of the aluminum purity and the trace metal content of the obtained recycled bare metal with a desired aluminium purity and a desired trace metal content predetermined for a planographic printing plate support in order to calculate differences therebetween, and determining a mixture ratio of a new aluminum bare metal (12) and a trace-metal master alloy with a determined purity with respect to the recycled bare metal on the basis of the calculated differences;
producing a pre-rolling melt by introducing the recycled bare metal (74), the new aluminum bare metal (12), and the trace-metal master alloy into a pre-rolling melting furnace at amounts corresponding to the determined mixture ratio, and heating and melting the resultant, the aluminum purity of the pre-rolling melt being 99.0% or higher; and
producing a strip-shaped aluminum substrate (88) by rolling the obtained pre-rolling melt.

2. A method of producing an aluminum substrate for a planographic printing plate according to Claim 1, wherein the recycled material further includes at least one of cut pieces of the aluminum substrate or cut pieces (33) of the planographic printing plate, which are generated during producing the planographic printing plate.

3. A method of recycling a planographic printing plate, the method sequentially comprising:
producing a planographic printing plate support obtained by treating an aluminum substrate for the planographic printing plate by sequentially performing a roughening treatment, an anodization treatment, and a hydrophilizing treatment using an aqueous solution including polyvinyl phosphonic acid on at least one surface of the aluminum substrate for the planographic printing plate;
producing a planographic printing plate precursor (30) by forming an image recording layer on the treated surface of the planographic printing plate support;
processing the obtained planographic printing plate precursor to obtain a planographic printing plate and performing a desired printing on the obtained planographic printing plate;
recovering the used planographic printing plate (36) generated after printing; and
recycling the recovered planographic printing plate by providing the recovered planographic printing plate as a recycled material of an aluminum substrate in the method of producing an aluminum substrate (88) for a planographic printing plate according to Claim 1,
wherein the recycled material is the recycled material obtained by the method of producing an aluminum substrate for a planographic printing plate according to Claim 1.

4. A method according to Claim 3, wherein the aluminum substrate for the planographic printing plate is the aluminum substrate obtained by the method recited in Claim 2.

## Patentansprüche

1. Verfahren zur Herstellung eines Aluminiumsubstrats für eine Flachdruckplatte, wobei das Verfahren nacheinander umfasst:
Bereitstellen eines recycelten Materials, das eine gebrauchte Flachdruckplatte (36) enthält, die einen Flachdruckplattenträger aufweist, erhalten durch Behandeln eines Aluminiumsubstrats durch sequentielles Durchführen einer Aufraubehandlung, einer Anodisierungsbehandlung und einer Hydrophilisierungsbehandlung unter Verwendung einer wässrigen Lösung, die Polyvinylphosphonsäure enthält;
Herstellen eines recycelten Rohmetalls durch Einführen des erhaltenen recycelten Materials in einen Schmelzofen (42), Schmelzen des recycelten Materials bei einer Temperatur von 680°C bis 900°C, um eine Schmelze des recycelten Materials zu erhalten, und Formen der Schmelze des recycelten Materials zu einer vorbestimmten Form (74) mit einem vorbestimmten Gewicht;
Analysieren der Aluminiumreinheit und des Spurenmetallgehalts des erhaltenen recycelten Rohmetalls;
Vergleichen der Analysewerte für die Aluminiumreinheit und den Spurenmetallgehalt des erhaltenen recycelten Rohmetalls mit einer gewünschten Aluminiumreinheit und einem gewünschten Spurenmetallgehalt, die für einen Flachdruckplattenträger vorbestimmt sind, um Unterschieden zwischen diesen zu berechnen, und Bestimmen des Mischungsverhältnisses eines neuen Aluminium-Rohmetalls (12) und einer Spurenmetall-Masterlegierung mit einer vorbestimmten Reinheit in Bezug auf das recycelte Rohmetall auf Grundlage der berechneten Unterschiede;
Herstellen einer Vor-Walz-Schmelze durch Einführen des recycelten Rohmetalls (74), des neuen Aluminium-Rohmetalls (12) und der Spurenmetall-Masterlegierung in einen Vor-Walz-Schmelzofen in Mengen, die dem bestimmten Mischungsverhältnis entsprechen, und Erwärmen und Schmelzen der resultierenden Mischung, wobei die Aluminiumreinheit der Vor-Walz-Schmelze 99,0 % oder größer ist; und
Herstellen eines blechförmigen Aluminiumsubstrats (88) durch Walzen der erhaltenen Vor-Walz-Schmelze.

2. Verfahren zur Herstellung eines Aluminiumsubstrats für eine Flachdruckplatte gemäß Anspruch 1, worin das recycelte Material ferner mindestens eines von geschnittenen Teilen des Aluminiumsubstrats oder geschnittenen Teilen (33) der Flachdruckplatte, die während der Herstellung der Flachdruckplatte generiert werden, umfasst.

3. Verfahren zum Recyceln einer Flachdruckplatte, wobei das Verfahren nacheinander umfasst:
Bereitstellen eines Flachdruckplattenträgers, erhalten durch Behandeln eines Aluminiumsubstrat für eine Flachdruckplatte durch sequentielles Durchführen einer Aufraubehandlung, einer Anodisierungsbehandlung und einer Hydrophilisierungsbehandlung unter Verwendung einer wässrigen Lösung, die Polyvinylphosphonsäure umfasst, auf mindestens einer Oberfläche des Aluminiumsubstrats für die Flachdruckplatte;
Herstellen eines Flachdruckplattenvorläufers (30) durch Bilden einer Bildaufzeichnungsschicht auf der behandelten Oberfläche des Flachdruckplattenträgers;
Verarbeiten des erhaltenen Flachdruckplattenvorläufers, um eine Flachdruckplatte zu erhalten, und Durchführen des gewünschten Druckens mit der erhaltenen Flachdruckplatte;
Zurückgewinnen der gebrauchten Flachdruckplatte (36), die nach dem Drucken gebildet ist; und
Recyceln der zurückgewonnenen Flachdruckplatte durch Bereitstellen der zurückgewonnen Flachdruckplatte als ein recyceltes Material für ein Aluminiumsubstrat in dem Verfahren zur Herstellung eines Aluminiumsubstrats (88) für ein Flachdruckplatte gemäß Anspruch 1,
worin das recycelte Material das recycelte Material ist, das durch das Verfahren zur Herstellung eines Aluminiumsubstrats für eine Flachdruckplatte gemäß Anspruch 1 erhalten wird.

4. Verfahren gemäß Anspruch 3, worin das Aluminiumsubstrat für die Flachdruckplatte das Aluminiumsubstrat ist, das durch das in Anspruch 2 angegebene Verfahren erhalten wird.

## Revendications

1. Procédé de production d'un substrat en aluminium pour une plaque d'impression planographique, le procédé consistant à, successivement :
préparer un matériau recyclé, comprenant une plaque d'impression planographique utilisée (36) présentant un support de plaque d'impression planographique obtenu en traitant un substrat en aluminium, successivement par un traitement de dégrossissage, un traitement d'anodisation, et un traitement d'hydrophilisation en utilisant une solution aqueuse contenant de l'acide polyvinyl phosphonique ;
produire un métal nu recyclé par introduction du matériau recyclé obtenu dans un four de fusion (42), fusion du matériau recyclé à une température de 680°C à 900°C pour obtenir une masse fondue de matériau recyclé, et façonnage de la masse fondue de matériau recyclé sous une forme prédéterminée (74) de masse prédéterminée ;
analyser la pureté de l'aluminium et une teneur en éléments-traces métalliques, du métal nu recyclé obtenu ;
comparer les valeurs de l'analyse de la pureté de l'aluminium et de la teneur en éléments-traces métalliques du métal nu recyclé obtenu, à une pureté souhaitée de l'aluminium et à une teneur souhaitée en éléments-traces métalliques prédéterminées, pour un support de plaque d'impression planographique, afin de calculer des différences entre elles, et déterminer un rapport de mélange d'un nouveau métal nu d'aluminium (12) et d'un alliage mère à éléments-traces métalliques ayant une pureté déterminée par rapport au métal nu recyclé, sur base des différences calculées ;
produire une masse en fusion de pré-laminage en introduisant le métal nu recyclé (74), le nouveau métal nu d'aluminium (12), et l'alliage maître à éléments-traces métalliques dans un four de fusion de pré-laminage en quantités correspondant au rapport de mélange déterminé, et chauffer et faire fondre le produit résultant, la pureté de l'aluminium de la masse fondue de pré-laminage étant de 99,0% ou plus, et
produire un substrat d'aluminium (88) en forme de bande, obtenue par laminage de la masse fondue de pré-laminage.

2. Procédé de production d'un substrat en aluminium pour une plaque d'impression planographique selon la revendication 1, dans lequel la matériau recyclé comprend de plus l'un au moins parmi des morceaux découpés dans le substrat d'aluminium ou des morceaux (33) découpés dans la plaque d'impression planographique, qui sont générés lors de la production de la plaque d'impression planographique.

3. Procédé de recyclage d'une plaque d'impression planographique, le procédé consistant à, successivement :
produire un support de plaque d'impression planographique obtenu en traitant un substrat en aluminium pour la plaque d'impression planographique en effectuant successivement un traitement de dégrossissage, un traitement d'anodisation, et un traitement d'hydrophilisation en utilisant une solution aqueuse contenant de l'acide polyvinyl phosphonique sur au moins une surface du substrat d'aluminium pour la plaque d'impression planographique ;
produire un précurseur (30) de plaque d'impression planographique en formant une couche d'enregistrement d'image sur la surface traitée du support de plaque d'impression planographique ;
traiter le précurseur de plaque d'impression planographique obtenu, pour obtenir une plaque d'impression planographique et réaliser une impression désirée sur la plaque d'impression planographique obtenue ;
récupérer la plaque d'impression planographique utilisée (36) générée après impression ; et
recycler la plaque d'impression planographique récupérée en fournissant la plaque d'impression planographique récupérée en tant que matériau recyclé d'un substrat d'aluminium dans le procédé de production d'un substrat en aluminium (88) pour une plaque d'impression planographique selon la revendication 1,
dans lequel le matériau recyclé est le matériau recyclé obtenu par le procédé de production d'un substrat en aluminium pour une plaque d'impression planographique selon la revendication 1.

4. Procédé selon la revendication 3, dans lequel le substrat en aluminium pour la plaque d'impression planographique est le substrat en aluminium obtenu par le procédé selon la revendication 2.
